# EUROPÄISCHE PATENTSCHRIFT

(11) **EP 3 884 759 B1**
(45) Veröffentlichungstag und Bekanntmachung des Hinweises auf die Patenterteilung: **26.02.2025**
(21) Anmeldenummer: 21162148.7
(22) Anmeldetag: 11.03.2021
(51) Int. Cl.: A01D 34/86, A01D 89/00, A01D 41/14

(54) **ERNTEVORRICHTUNG**
HARVESTING DEVICE
DISPOSITIF DE RÉCOLTE

(30) Priorität: 12.03.2020 DE 102020106803
(43) Veröffentlichungstag der Anmeldung: 29.09.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 2 789 223
- DE-A1- 102014 103 630
- DE-A1- 102016 103 475
- GB-A- 1 578 207
- US-A1- 2014 150 396

## Beschreibung

Die Erfindung betrifft eine Erntevorrichtung, nämlich einen Merger oder Pickup-Schwader, nach dem Oberbegriff des Anspruchs 1.

US 2014/0150396 A1 offenbart eine Aufnahmevorrichtung, für eine landwirtschaftliche Maschine, umfassend einen Rahmen sowie eine erste und eine zweite Einheit, wobei die erste und die zweite Einheit jeweils eine Verschiebevorrichtung enthalten und nebeneinander in geringem Abstand zueinander angeordnet sind sowie jeweils durch ein Gelenk direkt mit dem Rahmen verbunden sind, und wobei die Einheiten jeweils einen drehbaren ersten bzw. einen zweiten Aufnahmerotor enthalten, die durch eine Führungsvorrichtung miteinander verbunden sind, wobei die Drehachsen der Aufnahmerotoren jeweils in der Ebene der Gelenkachsen liegen mit welchen die Einheiten mit dem Rahmen verbunden sind und ein Anschlagmechanismus vorgesehen ist, der zwei Arbeitsendpositionen der Einheiten in Bezug auf den Rahmen definiert, zwischen denen sie innerhalb eines begrenzten Bereichs frei schwenken können und unabhängig von ihrer Position zwischen den Arbeitsendpositionen miteinander verbunden bleiben.

Das Dokument GB 1 578 207 A offenbart einen Aufnehmer für am Boden liegendes Erntegut, zum Frontanbau an eine Erntemaschine, mit Aufnahmetrommeln und dahinter liegender Querförderschnecke, wobei die Aufnahmetrommel um eine mittig am Aufnehmer befindliche gemeinsame Schwenkachse oder um einzeln angebrachte Schwenkachsen verschwenkbar sind und die Aufnahmetrommeln mit Gleitkufen gegenüber dem Erdboden und in den Seitenwänden sowie in der Mitte des Aufnehmers in einer Kulisse geführt werden.

Aus der EP 2 979 529 B1 ist eine als Merger ausgebildete landwirtschaftliche Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Der Tragrahmen verfügt über einen Längsträger sowie über Querträger, wobei die Aufnahmeorgane und Querfördereinrichtungen an den Querträgern aufgenommen sind. Die Aufnahmeorgane sowie Querförderreinrichtungen sind klappbar, um die als Merger ausgebildete Erntevorrichtung zwischen einer Arbeitsstellung und einer Transportstellung zu überführen. Über eine am Tragrahmen angreifende Deichsel ist die als Merger ausgebildete landwirtschaftliche Erntevorrichtung an ein Zugfahrzeug koppelbar.

Dann, wenn eine als Merger oder Pickup-Schwader ausgebildete Erntevorrichtung zur Bearbeitung eines unebenen Untergrunds zum Einsatz kommt, kann unter Umständen nicht sämtliches Erntegut vom Untergrund aufgenommen werden. Dies liegt daran, dass bei bislang bekannten Mergern oder Pickup-Schwadern eine Bodenanpassung nicht oder nur in begrenztem Umfang möglich ist. Es besteht daher Bedarf an einer als Merger oder Pickup-Schwader ausgebildeten Erntevorrichtung, die über eine verbesserte Bodenanpassung verfügt, um auch einen unebenen Untergrund mit höherer Qualität bearbeiten zu können.

Hiervon ausgehend liegt der vorliegenden Erfindung die Aufgabe zugrunde, eine neuartige, als Merger oder Pickup-Schwader ausgebildete, Erntevorrichtung zu schaffen.

Diese Aufgabe wird durch eine Erntevorrichtung nach Anspruch 1 gelöst.

Erfindungsgemäß ist jedes als Pickup ausgebildete Aufnahmeorgan an einer jeweiligen als Bandförderer ausgebildeten Querfördereinrichtung schwenkbar gelagert, nämlich bezogen auf das jeweilige Aufnahmeorgan mittig über ein jeweiliges Gelenk.

Hierdurch ist es möglich, dass jedes Aufnahmeorgan individuell eine Bodenanpassung ausführen kann. Dies ist mit einfachen konstruktiven Mitteln möglich. Bei der Bearbeitung eines unebenen Untergrunds kann die Bearbeitungsqualität deutlich verbessert werden. Es kann mehr Erntegut vom Untergrund sicher aufgenommen werden.

Nach einer vorteilhaften Weiterbildung verläuft eine Drehachse des jeweiligen Gelenks in Ernterichtung oder Fahrtrichtung. Das jeweilige Gelenk weist vorzugsweise einen zylindrischen oder rohrartigen Träger auf, der mittig an dem jeweiligen Aufnahmeorgan angreift und sich in eine Ausnehmung in der jeweiligen Querfördereinrichtung hinein erstreckt, in welcher derselbe schwenkbar gelagert ist. Dies erlaubt mit einfachen konstruktiven Mitteln für jedes Aufnahmeorgan eine individuelle Bodenanpassung.

Erfindungsgemäß wirkt mit jedem Aufnahmeorgan eine Verstellkinematik zusammen, um eine Relativposition zwischen dem jeweiligen Aufnahmeorgan und Tasträdern zu verändern. Die jeweilige Verstellkinematik weist eine linear verlagerbare Stange auf, über die in einer ersten Verlagerungsrichtung der Stange das jeweilige Aufnahmeorgan insbesondere relativ zu den jeweiligen Tasträdern absenkbar ist, und über die in einer zweiten Verlagerungsrichtung der Stange das jeweilige Aufnahmeorgan insbesondere relativ zu den jeweiligen Tasträdern anhebbar ist. Hiermit kann die individuelle Bodenanpassung jedes Aufnahmeorgans weiter verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht von oben auf ein Zuggespann, welches eine als Merger oder Pickup-Schwader ausgebildete Erntevorrichtung und ein Zugfahrzeug umfasst, in Arbeitsstellung;
- Fig. 2: eine perspektivische Ansicht von vorne oben auf ein Detail der als Merger oder Pickup-Schwader ausgebildeten Erntevorrichtung;
- Fig. 3: eine perspektivische Ansicht von unten hinten auf das Detail der Fig. 2;
- Fig. 4: eine Vorderansicht des Details der Fig. 1, 2 in einem ersten Zustand einer Bodenanpassung in Arbeitsstellung;
- Fig. 5: eine Vorderansicht des Details der Fig. 1, 2 in einem zweiten Zustand einer Bodenanpassung in Arbeitsstellung;
- Fig.6: eine Vorderansicht des Details der Fig. 1, 2 in einem dritten Zustand einer Bodenanpassung in Arbeitsstellung;
- Fig. 7: eine teilweise perspektivische Explosionsansicht von vorne oben auf das Detail der Fig. 1, 2;
- Fig. 8: eine teilweise perspektivische Explosionsansicht von hinten unten auf das Detail der Fig. 1, 2.

Die Erfindung betrifft eine als Merger ausgebildete Erntevorrichtung. Eine solche Erntevorrichtung wird auch als Pickup-Schwader bezeichnet und besteht im Wesentlichen aus wenigstens einem Aufnahmeorgan, welches Erntegut vom Boden aufnimmt, und einer mit dem Aufnahmeorgan zusammenwirkenden Querfördereinrichtung, welche das vom Aufnahmeorgan übergebene Erntegut quer zur Ernte- bzw. Fahrtrichtung fördert.

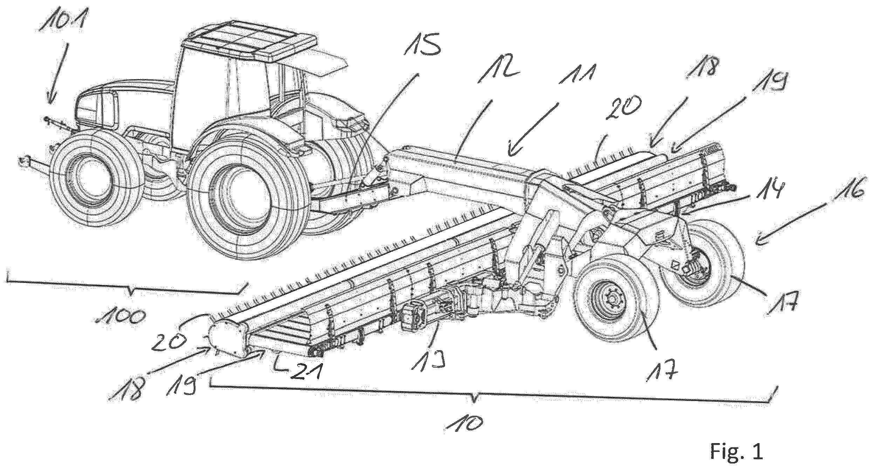

Fig. 1 zeigt ein Zuggespann aus einer als Merger oder Pickup-Schwader ausgebildeten Erntevorrichtung 10 und einem Zugfahrzeug 100 in Arbeitsstellung.

Die in Fig. 1 gezeigte Erntevorrichtung 10 verfügt über einen Tragrahmen 11 mit einem Längsträger 12 sowie Querträgern 13, 14. Über den Längsträger 12, nämlich eine am vorderen Ende des Längsträgers 12 angreifende Deichsel 15, ist die Erntevorrichtung 10 an das Zugfahrzeug 100 ankoppelbar, um vom Zugfahrzeug 100 entlang eines zu bearbeitenden Untergrunds gezogen zu werden. Der Längsträger 12 erstreckt sich dabei in Fahrtrichtung bzw. Ernterichtung. Die Querträger 13, 14 erstrecken sich quer oder senkrecht hierzu.

Die in Fig.1 gezeigte Erntevorrichtung 10 verfügt weiterhin über ein Fahrwerk 16 mit Rädern 17. Das Fahrwerk 16 wird auch als Hauptfahrwerk bezeichnet. Über die Räder 17 des Fahrwerks 16 stützt sich sowohl in einer Arbeitsstellung als auch in einer Transportstellung sowie in einer Vorgewendestellung die als Merger ausgebildete Erntevorrichtung 10 auf einem zu bearbeitenden bzw. zu befahrenden Untergrund ab.

Die Erntevorrichtung 10 verfügt weiterhin über Aufnahmeorgane 18 sowie Querfördereinrichtungen 19. Die Aufnahmeorgane 18 der Erntevorrichtung 10 sind als sogenannte Pickup ausgebildet und dienen dem Aufnehmen von Erntegut vom Feldboden/Untergrund. Zu einer ersten Seite des Längsträgers 12 ist mindestens ein Aufnahmeorgan 18 angeordnet, an einer zweiten Seite des Längsträgers 12 ist mindestens ein Aufnahmeorgan 18 angeordnet.

Vorzugsweise sind, wie in Fig.1 gezeigt, zu jeder Seite des Längsträgers 12 jeweils zwei Aufnahmeorgane 18 angeordnet.

Die Aufnahmeorgane 18 verfügen dabei über Aufnahmezinken 20, die zum Aufnehmen des Ernteguts vom zu bearbeitenden bzw. zu befahrenden Untergrund um eine sich quer zur Ernterichtung oder Fahrtrichtung erstreckende Achse angetrieben werden.

Jedes der Aufnahmeorgane 18 stützt sich in der Arbeitsstellung der Erntevorrichtung 10 über Tasträder 21 auf dem zu bearbeitenden Untergrund ab. In der Vorgewendestellung und Transportstellung der Erntevorrichtung 10 sind die Tasträder 21 vom zu bearbeitenden Untergrund abgehoben.

Wie bereits ausgeführt, verfügt die Erntevorrichtung 10 zusätzlich zu den Aufnahmeorganen 18 über die Querfördereinrichtungen 19.

Die Querfördereinrichtungen 19 der Erntevorrichtung 10 sind als Bandförderer ausgebildet, wobei über die Querfördereinrichtungen 19 das über die Aufnahmeorgane 18 vom zu bearbeitenden Untergrund aufgenommene Erntegut in einer sich zur Ernterichtung oder Fahrtrichtung quer bzw. senkrecht erstreckenden Querförderrichtung 19 transportierbar ist.

Zu der ersten Seite des Längsträgers 12 ist mindestens eine Querfördereinrichtung 19 angeordnet, zu der zweiten Seite des Längsträgers 12 ist mindestens eine weitere Querfördereinrichtung 19 angeordnet, wobei beide dieser Querfördereinrichtungen 19 als Bandförderer ausgeführt sind.

Vorzugsweise ist, wie in Fig.1 gezeigt, zu jeder Seite des Längsträgers 12 jeweils eine einzige Querförderrichtung 19 angeordnet.

Wie den Zeichnungen entnommen werden kann, sind in Ernterichtung oder Fahrtrichtung der Erntevorrichtung gesehen, die Querfördereinrichtungen 19 hinter den Aufnahmeorganen 18 angeordnet.

Die Erfindung ist nicht auf die in Fig. 1 gezeigte, als Merger oder Pickup-Schwader ausgebildete Erntevorrichtung 10 beschränkt. vielmehr kann die Erfindung auch bei einer als Merger oder Pickup-Schwader ausgebildeten Erntevorrichtung zum Einsatz kommen, die über kein eigenes Fahrwerk 16 verfügt, sondern vielmehr an eine Frontkopplungseinrichtung 101 des Zugfahrzeugs 100 angekoppelt ist. Bei dem Fahrwerk 16 mit den Rädern 17 und dem Tragrahmen 11 mit dem Längsträger 12 und den Querträgern 13, 14 handelt es sich um optionale Baugruppen.

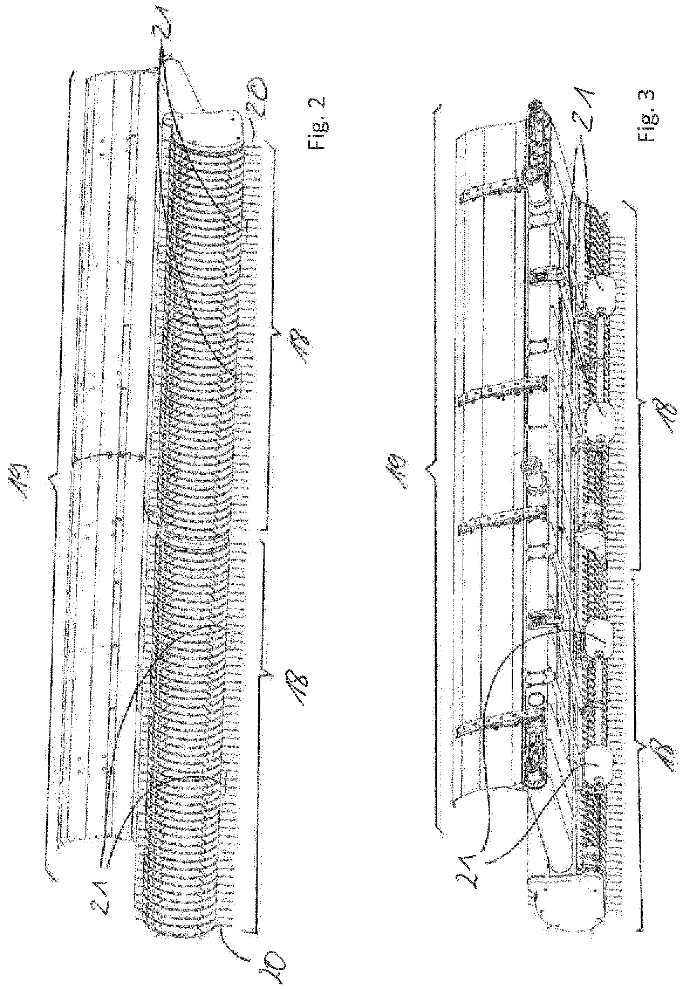

Fig. 2 und 3 zeigen jeweils eine perspektivische Ansicht auf ein Detail der Erntevorrichtung 10 der Fig. 1, nämlich im Bereich einer als Bandförderer ausgebildeten Querfördereinrichtung 19 sowie im Bereich von zwei als Pickup ausgebildeten Aufnahmeorganen 18, die in Ernterichtung bzw. Fahrtrichtung bzw. Längsrichtung vor der Querfördereinrichtung 19 angeordnet sind.

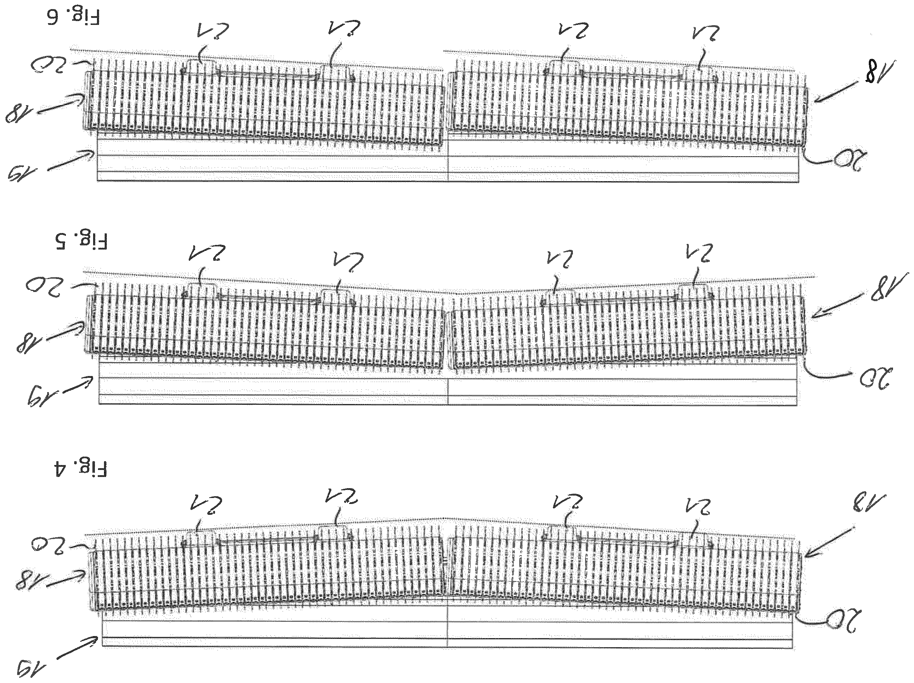

Um eine optimale Bodenanpassung für die Erntevorrichtung 10 an Unebenheiten eines zu bearbeitenden Untergrunds zu ermöglichen, ist jedes als Pickup ausgebildete Aufnahmeorgan 18 an einer jeweiligen als Bandförderer ausgebildeten Querfördereinrichtung 19 individuell schwenkbar gelagert, nämlich bezogen auf das jeweilige Aufnahmeorgan 18 mittig über ein jeweiliges Gelenk 22. So zeigen Fig. 4, 5 und 6 das Detail der Fig. 1 und 2 in unterschiedlichen Zuständen zur Bodenanpassung an einen zu bearbeitenden Untergrund, der in Fig. 4, 5 und 6 in punktierter Linienführung angedeutet ist.

So sind in Fig. 4 die als Pickup ausgebildeten Aufnahmeorgane 18 in einem Zustand gezeigt, den dieselben zum Beispiel einnehmen, wenn der zu bearbeitende Untergrund eine Senke aufweist.

In Fig. 5 sind die Aufnahmeorgane 18 in einem Zustand gezeigt, den dieselben zum Beispiel einnehmen, wenn der zu bearbeitende Untergrund eine Kuppe aufweist.

In Fig. 6 sind die Aufnahmeorgane 18 in einem Zustand gezeigt, den dieselben zum Beispiel einnehmen, wenn der zu bearbeitende Untergrund eine Neigung mit einer Stufe und damit eine abgestufte Neigung aufweist.

Jedes der als Pickup ausgebildeten Aufnahmeorgane 18 ist, wie bereits ausgeführt, an der jeweiligen als Bandförderer ausgebildeten Querfördereinrichtung 19 schwenkbar gelagert. Somit kann sich jedes Aufnahmeorgan 18 bezogen auf die jeweilige Querfördereinrichtung 19 zum Zwecke einer Bodenanpassung an einen zu bearbeitenden Untergrund individuell ausrichten.

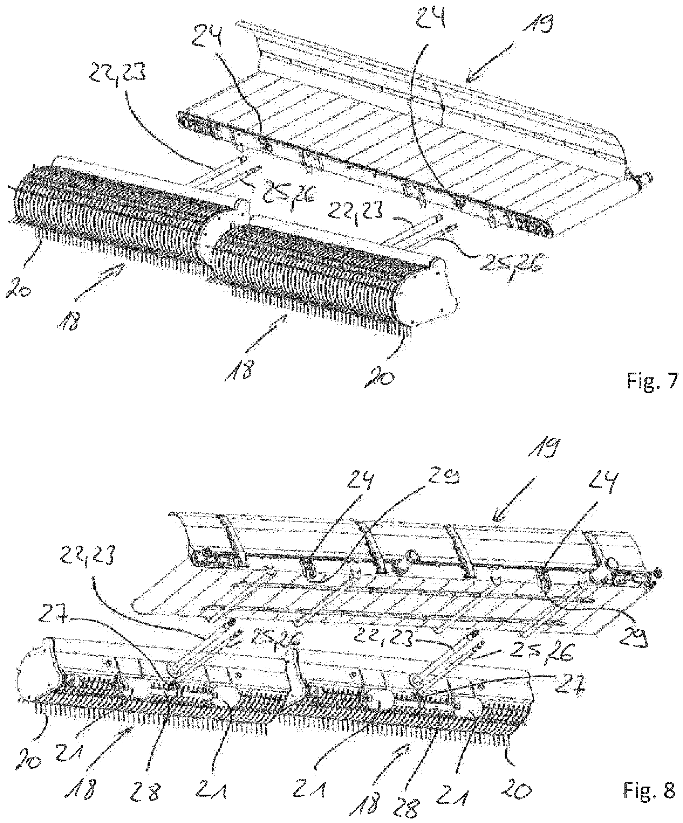

Bezogen auf das jeweilige Aufnahmeorgan 18 ist das jeweilige Aufnahmeorgan 18 mittig an der jeweiligen Querfördereinrichtung 19 schwenkbar gelagert, nämlich über jeweils ein Gelenk 22. Auf die Ausführungen dieses Gelenks 22 wird nachfolgend unter Bezugnahme auf die Explosionsdarstellungen der Fig. 7 und 8 eingegangen.

Das jeweilige Gelenk 22 zur individuellen schwenkbaren Lagerung des jeweiligen Aufnahmeorgans 18 an der jeweiligen Querfördereinrichtung 19 umfasst einen zylindrischen oder rohrartigen Träger 23, der bezogen auf die Breite des jeweiligen Aufnahmeorgans 18 mittig am jeweiligen Aufnahmeorgan 18 angreift. Dieser zylindrische oder rohrartige Träger 23 erstreckt sich in eine Ausnehmung 24 in der jeweiligen Querfördereinrichtung 19 hinein, in welcher der zylindrische oder rohrartige Träger 23 schwenkbar gelagert ist, insbesondere über in der jeweiligen Ausnehmung 24 positionierte Lager.

Eine Drehachse bzw. Schwenkachse des jeweiligen Gelenks 22 verläuft in Ernterichtung bzw. Fahrtrichtung und damit in Fig. 1 parallel zu einer Längsrichtung des Längsträgers 12 des Tragrahmens 11.

Um die Bodenanpassung des jeweiligen Aufnahmeorgans 18 weiter zu verbessern, ist eine Relativposition zwischen den jeweiligen Tasträder 21 und dem jeweiligen Aufnahmeorgan 18 über eine Verstellkinematik 25 verstellbar. Die jeweilige Verstellkinematik 25 verfügt dabei über eine linear verlagerbare Stange 26, die ebenso wie der zylindrische oder rohrartige Träger 23 bezogen auf die Breite des jeweiligen Aufnahmeorgans 18 mittig am jeweiligen Aufnahmeorgan 18 angreift und sich unterhalb des jeweiligen Trägers 23 erstreckt bzw. unterhalb des jeweiligen Trägers 23 verläuft. Ein erstes Ende dieser Stange 26 greift an einem Hebel 27 des Aufnahmeorgans 18 an, der auch an einer die Tasträder 21 aufnehmenden Achse 28 angreift. Ein gegenüberliegendes zweites Ende der Stange 26 ist in einer Lasche 29 geführt, die an einer von den Aufnahmeorganen 18 abgewandten Seite der jeweiligen Querfördereinrichtung 19 angreift.

Durch Verlagerung der jeweiligen Stange 26 in einer ersten linearen Verlagerungsrichtung ist das jeweilige Aufnahmeorgan 18 insbesondere relativ zu den jeweiligen Tasträdern 21 absenkbar. Dies erfolgt dann, wenn an der Stange 26 ausgehend von der Querfördereinrichtung 19 gesehen gezogen wird, wenn also auf die Stange 26 eine Zugkraft ausgeübt wird, die so ausgerichtet ist, dass der jeweilige Kraftvektor ausgehend vom jeweiligen Aufnahmeorgan 18 in Richtung auf die jeweilige Querfördereinrichtung 19 zeigt. Durch Verlagerung der Stange 26 in einer entgegengesetzten zweiten Verlagerungsrichtung ist das jeweilige Aufnahmeorgan 18 relativ zu den jeweiligen Tasträdern 21 anhebbar, nämlich dann, wenn eine Schubkraft auf die jeweilige Stange 26 ausgeübt wird, deren Kraftvektor ausgehend von der jeweiligen Querfördereinrichtung 19 in Richtung auf das jeweilige Aufnahmeorgan 18 zeigt.

Die Erfindung erlaubt eine optimale Bodenanpassung der als Merger oder Pickup-Schwader ausgebildeten Erntevorrichtung an einen zu bearbeitenden Untergrund. Jedes als Pickup ausgebildete Aufnahmeorgan 18 kann sich individuelle relativ zur jeweiligen als Bandförderer ausgebildeten Querfördereinrichtung 19 verdrehen. Hiermit kann selbst bei unebenem zu bearbeitendem Untergrund Erntegut von den Aufnahmeorganen 18 der Erntevorrichtung 10 gut aufgenommen und auf die jeweilige Querfördereinrichtung 19 übergeben werden.

### Bezugszeichenliste

- 10: Erntevorrichtung
- 11: Tragrahmen
- 12: Längsträger
- 13: Querträger
- 14: Querträger
- 15: Deichsel
- 16: Fahrwerk
- 17: Rad
- 18: Aufnahmeorgan
- 19: Querfördereinrichtung
- 20: Aufnahmezinken
- 21: Tastrad
- 22: Gelenk
- 23: Träger
- 24: Ausnehmung
- 25: Verstellkinematik
- 26: Stange
- 27: Hebel
- 28: Achse
- 29: Lasche

- 100: Zugfahrzeug
- 101: Frontkopplungseinrichtung

## Patentansprüche

1. Erntevorrichtung (10), nämlich Merger oder Pickup-Schwader,
mit als Pickup ausgebildeten Aufnahmeorganen (18) zum Aufnehmen von Erntegut, wobei jedes Aufnahmeorgan (18) an einer jeweiligen Querfördereinrichtung (19) schwenkbar gelagert ist, nämlich bezogen auf das jeweilige Aufnahmeorgan (18) mittig über ein jeweiliges Gelenk (22)
mit mindestens einer Querfördereinrichtung (19) zum Fördern des aufgenommenen Ernteguts in einer quer zu einer Ernterichtung oder Fahrtrichtung verlaufenden Querförderrichtung,
**dadurch gekennzeichnet, dass**
die Querfördereinrichtung (19) als Bandförderer ausgebildet ist und mit jedem Aufnahmeorgan (18) eine Verstellkinematik (25) zusammenwirkt, um eine Relativposition zwischen dem jeweiligen Aufnahmeorgan (18) und Tasträdern (21) zu verändern,
wobei die jeweilige Verstellkinematik (25) eine linear verlagerbare Stange (26) aufweist, über die in einer ersten Verlagerungsrichtung der Stange (26) das jeweilige Aufnahmeorgan (18) absenkbar ist, und über die in einer zweiten entgegengesetzten Verlagerungsrichtung der Stange (26) das jeweilige Aufnahmeorgan (18) anhebbar ist.

2. Erntevorrichtung nach Anspruch 1, **dadurch gekennzeichnet, dass** eine Drehachse des jeweiligen Gelenks (22) in Ernterichtung oder Fahrtrichtung verläuft.

3. Erntevorrichtung nach Anspruch 1 oder 2, **dadurch gekennzeichnet, dass** das jeweilige Gelenk (22) einen zylindrischen oder rohrartigen Träger (23) aufweist, der mittig an dem jeweiligen Aufnahmeorgan (18) angreift und sich in eine Ausnehmung (24) in der jeweiligen Querfördereinrichtung (19) hinein erstreckt, in welcher derselbe schwenkbar gelagert ist.

4. Erntevorrichtung nach Anspruch 1, **dadurch gekennzeichnet, dass** die jeweilige linear verlagerbare Stange (26) mit einem ersten Ende an dem jeweiligen Aufnahmeorgan (18) mittig angreift, wobei ein gegenüberliegendes zweites Ende der jeweiligen Stange (26) in einer Lasche (29) der jeweiligen Querfördereinrichtung (19) geführt ist.

5. Erntevorrichtung nach Anspruch 4, **dadurch gekennzeichnet, dass** die jeweilige linear verlagerbare Stange (26) mit dem ersten Ende an einem Hebel (27) des jeweiligen Aufnahmeorgans (18) angreift, der an einer die Tasträder (21) des jeweiligen Aufnahmeorgans (18) aufnehmende Achse (28) angreift.

6. Erntevorrichtung nach Anspruch 3 und 4 oder 5, **dadurch gekennzeichnet, dass** die jeweilige linear verlagerbare Stange (26) unterhalb des jeweiligen zylindrischen oder rohrartigen Trägers (23) verläuft.

## Claims

1. Harvesting apparatus (10), specifically merger or pick-up windrower,
with receiving members (18) which are in the form of pick-ups and serve for receiving harvested crop, wherein each receiving member (18) is mounted pivotably on a respective transverse conveying device (19), specifically centrally in relation to the respective receiving member (18) via a respective joint (22),
with at least one transverse conveying device (19) for conveying the received harvested crop in a transverse conveying direction which extends transversely to a harvesting direction or direction of travel, **characterized in that**
the transverse conveying device (19) is in the form of a belt conveyor, and
an adjustment kinematic mechanism (25) interacts with each receiving member (18) so as to change a relative position between the respective receiving member (18) and feeler wheels (21),
wherein the respective adjustment kinematic mechanism (25) has a linearly displaceable rod (26) via which the respective receiving member (18) is lowerable in a first displacement direction of the rod (26) and via which the respective receiving member (18) is liftable in a second, opposite displacement direction of the rod (26).

2. Harvesting apparatus according to Claim 1, **characterized in that** an axis of rotation of the respective joint (22) extends in the harvesting direction or direction of travel.

3. Harvesting apparatus according to Claim 1 or 2, **characterized in that** the respective joint (22) has a cylindrical or tubular support (23) which acts centrally on the respective receiving member (18) and which extends into a cutout (24) in the respective transverse conveying device (19), in which said support is pivotably mounted.

4. Harvesting apparatus according to Claim 1, **characterized in that** the respective linearly displaceable rod (26) acts centrally at a first end on the respective receiving member (18), wherein an opposite second end of the respective rod (26) is guided in a tab (29) of the respective transverse conveying device (19).

5. Harvesting apparatus according to Claim 4, **characterized in that** the respective linearly displaceable rod (26) acts at the first end on a lever (27) of the respective receiving member (18), said lever acting on a shaft (28) that receives the feeler wheels (21) of the respective receiving member (18).

6. Harvesting apparatus according to Claim 3 and 4 or 5, **characterized in that** the respective linearly displaceable rod (26) runs below the respective cylindrical or tubular support (23).

## Revendications

1. Dispositif de récolte (10), à savoir regroupeur ou ramasseur-andaineur,
avec des organes de réception (18) réalisés sous forme de ramasseur pour recevoir le produit récolté, chaque organe de réception (18) étant monté pivotant sur un appareil de transport transversal (19) respectif, à savoir au milieu par rapport à l'organe de réception (18) respectif par l'intermédiaire d'une articulation (22) respective,
avec au moins un appareil de transport transversal (19) pour transporter le produit récolté reçu dans une direction de transport transversal s'étendant transversalement à une direction de récolte ou à une direction de marche,
**caractérisé en ce que**
l'appareil de transport transversal (19) est réalisé sous forme de transporteur à bande, et
une cinématique de réglage (25) coopère avec chaque organe de réception (18) pour modifier une position relative entre l'organe de réception (18) respectif et des roues de palpage (21),
la cinématique de réglage (25) respective présentant une tige (26) déplaçable linéairement, par l'intermédiaire de laquelle l'organe de réception (18) respectif peut être abaissé dans une première direction de déplacement de la tige (26), et par l'intermédiaire de laquelle l'organe de réception (18) respectif peut être soulevé dans une deuxième direction de déplacement opposée de la tige (26).

2. Dispositif de récolte selon la revendication 1, **caractérisé en ce qu'**un axe de rotation de l'articulation respective (22) s'étend dans la direction de récolte ou dans la direction de marche.

3. Dispositif de récolte selon la revendication 1 ou 2, **caractérisé en ce que** l'articulation respective (22) présente un support cylindrique ou tubulaire (23) qui s'engage au milieu de l'organe de réception respectif (18) et s'étend dans un évidement (24) dans l'appareil de transport transversal respectif (19), dans lequel il est monté de manière pivotante.

4. Dispositif de récolte selon la revendication 1, **caractérisé en ce que** la tige (26) respective déplaçable linéairement s'engage par une première extrémité au milieu de l'organe de réception (18) respectif, une deuxième extrémité opposée de la tige (26) respective étant guidée dans une patte (29) de l'appareil de transport transversal (19) respectif.

5. Dispositif de récolte selon la revendication 4, **caractérisé en ce que** la tige (26) respective déplaçable linéairement s'engage par la première extrémité sur un levier (27) de l'organe de ramassage (18) respectif, qui s'engage sur un axe (28) recevant les roues de palpage (21) de l'organe de réception (18) respectif.

6. Dispositif de récolte selon les revendications 3 et 4 ou 5, **caractérisé en ce que** la tige (26) respective pouvant être déplacée linéairement s'étend en dessous du support (23) respectif cylindrique ou tubulaire.
